# EUROPÄISCHE PATENTANMELDUNG

(11) **EP 3 248 667 A1**
(43) Veröffentlichungstag der Anmeldung: **29.11.2017**
(21) Anmeldenummer: 17169485.4
(22) Anmeldetag: 04.05.2017
(51) Int. Cl.: B01D 46/10, B01D 46/24, B01D 46/52

(54) **FILTEREINRICHTUNG MIT FILTERELEMENT**

(30) Priorität: 13.05.2016 DE 102016208277
(71) Anmelder: Mahle International GmbH, 70376 Stuttgart (DE)
(72) Erfinder: GORENSCHEK, Werner, 9142 Globasnitz (AT); KOGLER, Gernot Josef, 9125 Kühnsdorf (AT); KOLLMANN, Andreas, 9421 Eitweg (AT); PLAZL, Lovro, 2391 Prevalje (SI)
(74) Vertreter: BRP Renaud & Partner mbB Rechtsanwälte Patentanwälte Steuerberater

(57) **Zusammenfassung**

Die vorliegende Erfindung betrifft ein Filterelement (5) für eine Filtereinrichtung (1), umfassend einen Filterkörper (9) aus einem Filtermaterial, der einen Innenraum (8) des Filterelements (5) zumindest teilweise umschließt, eine Anschlussplatte (10), die eine zum Innenraum (8) offene Anschlussöffnung (11) aufweist, eine um die Anschlussöffnung (11) geschlossen umlaufenden Dichtung (12), die im Bereich der Anschlussöffnung (11) an der Anschlussplatte (10) angeordnet ist, und eine sich durch den Innenraum (8) und durch die Anschlussöffnung (11) erstreckenden Längsachse (13).

Eine verbesserte Dichtungswirkung kann erreicht werden, wenn die Dichtung (12) quer zu ihrer Umlaufrichtung (16) ein Profil (17) aufweist, das einen V-förmigen Kontaktbereich (18) mit zwei Dichtlippen (19, 20) aufweist, und wenn die beiden Dichtlippen (19, 20) jeweils eine für eine radiale Kontaktierung mit einer Dichtfläche (22, 23) vorgesehene, radiale Dichtzonen (21) aufweisen, die von Spitzen (26) der Dichtlippen (19, 20) beabstandet sind.

## Beschreibung

Die vorliegende Erfindung betrifft ein Filterelement für eine Filtereinrichtung, insbesondere einer Frischluftanlage einer Brennkraftmaschine, mit den Merkmalen des Oberbegriffs des Anspruchs 1. Die Erfindung betrifft außerdem eine mit einem derartigen Filterelement ausgestattete Filtereinrichtung für eine Frischluftanlage einer Brennkraftmaschine.

Ein gattungsgemäßes Filterelement ist z.B. aus der WO 2009/047204 A1 bekannt und umfasst einen Filterkörper aus einem Filtermaterial, der einen Innenraum des Filterelements zumindest teilweise umschließt. Das Filterelement weist ferner eine Anschlussplatte auf, die eine zum Innenraum offene Anschlussöffnung aufweist. Ferner ist eine um die Anschlussöffnung geschlossen umlaufende Dichtung vorgesehen, die im Bereich der Anschlussöffnung an der Anschlussplatte angeordnet ist. Ferner erstreckt sich eine Längsachse des Filterelements durch den Innenraum und durch die Anschlussöffnung hindurch. Beim bekannten Filterelement ist der Filterkörper als geschlossener Ring ausgestaltet, so dass der Filterkörper den Innenraum in der Umfangsrichtung vollständig umschließt. Die Anschlussplatte ist in diesem Fall durch eine offene Endscheibe des Filterelements gebildet, die sich an einer axialen Stirnseite des ringförmigen Filterkörpers befindet und deren zentrale Öffnung die Anschlussöffnung bildet. Beim bekannten Filterelement ist die Anschlussplatte, respektive die jeweilige Endscheibe mit einem axial abstehenden, ringförmig geschlossen umlaufenden Kragen ausgestattet, der von der Anschlussöffnung radial beabstandet angeordnet ist. An diesem Ringkragen ist die Dichtung angebracht. Diese Dichtung weist quer zu ihrer Umlaufrichtung ein Profil auf, das radial außen zwei parallel zueinander, radial nach außen abstehende und sich dabei nach außen verjüngende Dichtlippen aufweist, deren Spitzen jeweils eine radiale Dichtzone definieren bzw. bilden, die für eine radiale Kontaktierung mit einer im Filtergehäuse einer Filtereinrichtung ausgebildeten zylindrischen Dichtfläche vorgesehen sind. Am Profil der Dichtung ist außerdem axial beabstandet zu den vorstehend genannten Dichtlippen eine weitere Dichtlippe vorgesehen, die als Staubschutz dient. Diese Staubschutzdichtlippe kommt dabei an einem Randbereich der gehäuseseitigen Dichtfläche vorgespannt zur Anlage, wobei die erzielbare Vorspannung von der Relativlage zwischen Filterelement und Filtergehäuse abhängt. Da sowohl das Filterelement als auch das Filtergehäuse Herstellungstoleranzen unterworfen sind, können sich variierende Relativlagen zwischen Filtergehäuse und Filterelement ergeben, wodurch auch die Vorspannkraft, mit der die Staubschutzdichtlippe gehäuseseitig anliegt, entsprechend variieren kann. Bei besonders ungünstigen Toleranzsituationen kann die sich einstellende Vorspannung so gering sein, dass eine ausreichende Dichtung nicht mehr gewährleistet ist.

Die vorliegende Erfindung beschäftigt sich mit dem Problem, für ein Filterelement der vorstehend beschriebenen Art bzw. für eine damit ausgestattete Filtereinrichtung eine verbesserte oder zumindest eine andere Ausführungsform anzugeben, die sich insbesondere durch eine erhöhte Toleranz gegenüber Herstellungstoleranzen auszeichnet.

Dieses Problem wird erfindungsgemäß durch den Gegenstand des unabhängigen Anspruchs gelöst. Vorteilhafte Ausführungsformen sind Gegenstand der abhängigen Ansprüche.

Die Erfindung beruht auf dem allgemeinen Gedanken, die Dichtung quer zu ihrer Umlaufrichtung mit einem Profil auszustatten, das einen V-förmigen Kontaktbereich aufweist, also einen Kontaktbereich, bei dem zwei Dichtlippen V-förmig angeordnet sind. Diese Dichtlippen sind elastisch verformbar und weisen jeweils eine für eine radiale Kontaktierung mit einer Dichtfläche eines Filtergehäuses vorgesehene radiale Dichtzone auf, wobei diese Dichtzone an der jeweiligen Dichtlippe distal zur Spitze der jeweiligen Dichtlippe positioniert ist. Somit definiert bei der jeweiligen Dichtlippe nicht die Spitze, sondern ein Abschnitt einer zur Spitze führenden Flanke der Dichtlippe. Hierdurch kann eine flächige Kontaktierung realisiert werden anstelle einer linienförmigen Kontaktierung, die dann auftritt, wenn die Dichtzone durch die Spitze der Dichtlippe gebildet ist. Vorteilhaft ist dabei die reduzierte Empfindlichkeit gegenüber Herstellungstoleranzen.

Bevorzugt ist dabei eine Ausführungsform, bei der die Dichtzonen der beiden Dichtlippen an den Innenflanken ausgebildet sind, welche die V-förmige Aussparung des V-förmigen Kontaktbereichs im Profil seitlich begrenzen. Insbesondere können diese radialen Dichtzonen der beiden Dichtlippen in einem entspannten Zustand der Dichtung einander zugewandt sein. Mit anderen Worten, diese radialen Dichtzonen befinden sich an der jeweiligen Dichtlippe an einer innenliegende Flanke, die bei entspannter Dichtung eine im V-förmigen Kontaktbereich durch die Dichtlippen ausgebildete V-förmige Rinne seitlich begrenzt. Hierdurch ermöglichen die radialen Dichtzonen der Dichtlippen jeweils einen vergleichsweise großflächigen Kontakt mit der jeweiligen Dichtfläche. Ferner bewirkt die elastische Verformbarkeit der Dichtlippen im Einbauzustand eine Vorspannung, die zu einer vorgespannten Anlage der jeweiligen radialen Dichtzone an der jeweiligen Dichtfläche bewirkt. Radial wirkende Dichtungen sind für Herstellungstoleranzen, die sich axial auswirken, unempfindlich, so dass mit Hilfe der hier vorgeschlagenen Dichtung in einem großen Bereich von Herstellungstoleranzen eine ausreichende Dichtungswirkung gewährleistet werden kann.

Entsprechend einer ersten grundlegenden Ausführungsform kann das Profil eine an der Anschlussplatte angeordnete Basis aufweisen, von welcher der Kontaktbereich axial ausgeht, so dass die Spitzen der Dichtlippen bei entspannter Dichtung radial voneinander weg weisen. Hierdurch kann erreicht werden, dass die Dichtlippen beim Montieren des Filterelements mit den Dichtflächen in Kontakt kommen und dabei aufgrund der Reibung mitgenommen und radial umgelegt werden können, wobei die eine Dichtlippe dann radial nach außen umgelegt wird, während die andere Dichtlippe radial noch innen umgelegt wird. Hierdurch lassen sich dann vergleichsweise hohe Vorspannkräfte realisieren, welche die Dichtungswirkung verbessern.

Eine entspannte Dichtung liegt dann vor, wenn das Filterelement nicht in ein zugehöriges Filtergehäuse eingebaut ist. Mit dem Einbau des Filterelements in das zugehörige Filtergehäuse einer entsprechenden Filtereinrichtung erfolgt in der Regel eine elastische Verformung der Dichtung, die innerhalb der Dichtung zu einer Verspannung führt. Diese Verspannung ist üblicherweise zur Erhöhung der Dichtungswirkung erwünscht.

Bei einer anderen Ausführungsform kann zwischen den im Kontaktbereich V-förmig angeordneten Dichtlippen eine Rinne ausgebildet sein, die axial offen ist. Die Rinne ist dabei zweckmäßig an einer vom Filterkörper abgewandten Axialseite offen. Auch diese Maßnahme erleichtert bei der Montage eine gezielte Verformung der Dichtlippen, um die gewünschten Vorspannkräfte zu erzeugen.

Bei einer anderen Ausführungsform können die radialen Dichtzonen der beiden Dichtlippen für eine radiale Kontaktierung mit zwei sich radial gegenüberliegenden Dichtflächen vorgesehen sein. Hierdurch erhält die Dichtung eine erhöhte Funktionalität, die bei preiswerter Herstellbarkeit komplexe Dichtungsaufgaben erfüllt.

Besonders vorteilhaft ist eine Ausführungsform, bei der die beiden Dichtlippen so weit elastisch umlegbar sind, bis ihre radialen Dichtzonen voneinander abgewandt sind. Auch dies erhöht die Funktionalität der hier vorgestellten Dichtung.

Eine andere Ausführungsform sieht vor, dass die beiden Dichtlippen so weit elastisch umlenkbar sind, bis ihre Spitzen jeweils zur Anschlussplatte weisen. Die Dichtlippen beschreiben dabei jeweils einen Bogen von mindestens 180°. Hierdurch ist es insbesondere möglich, an der jeweiligen Dichtlippe außerdem beabstandet zur jeweiligen radialen Dichtzone auch eine axiale Dichtzone auszubilden, die je nach Anwendung an einer weiteren Dichtfläche axial zur Anlage kommen kann.

Ferner kann bei einer anderen Ausführungsform vorgesehen sein, dass das Profil eine Basis aufweist, die auf einen Kragen axial aufgesteckt ist, der die Anschlussöffnung an einer vom Innenraum abgewandten Außenseite der Anschlussplatte einfasst. Hierdurch lässt sich die als separates Bauteil konfigurierte Dichtung einfach an der Anschlussplatte bzw. am Kragen montieren. Alternativ dazu kann die Dichtung auch an besagten Kragen angespritzt oder angeschäumt sein.

Der Filterkörper kann um den Innenraum ringförmig geschlossen umlaufen. In der Folge handelt es sich beim Filterelement um ein Ring-Filterelement. Alternativ dazu kann vorgesehen sein, dass der Filterkörper um den Innenraum nur U-förmig umläuft. Die sich dabei ausbildende offene Seite des U-förmigen Filterkörpers wird dann durch die Anschlussplatte verschlossen. In diesem Fall ist das Filterelement als Hufeisen-Filterelement ausgestaltet.

Entsprechend einer zweiten grundlegenden Ausführungsform kann das Profil eine an der Anschlussplatte angeordnete Basis aufweisen, von welcher der Kontaktbereich radial in Richtung zur Anschlussöffnung ausgeht, so dass die Spitzen der Dichtlippen bei entspannter Dichtung axial voneinander weg weisen. Auch diese Ausgestaltung kann für die Montage des Filterelements von Vorteil sein.

Insbesondere lassen sich mit Hilfe der radialen Dichtzonen der beiden Dichtlippen zwei parallel wirkende Dichtstellen an derselben Dichtfläche realisieren, was die Effizienz der Dichtung erhöht.

Bei einer anderen Ausführungsform kann zwischen den im Kontaktbereich V-förmig angeordneten Dichtlippen eine Rinne ausgebildet sein, die radial in Richtung zur Anschlussöffnung offen ist. Auch diese Maßnahme erleichtert die Ausbildung zwei parallel wirkender Dichtstellen.

Eine andere Ausführungsform schlägt vor, dass die radialen Dichtzonen der beiden Dichtlippen für eine radiale Kontaktierung mit einer gemeinsamen Dichtfläche vorgesehen sind. In diesem Fall wirken die beiden Dichtzonen parallel, sind jedoch hinsichtlich der Druckdifferenz in Reihe angeordnet, was die Dichtungswirkung signifikant verbessert.

Vorteilhaft ist eine Ausführungsform, bei der die beiden Dichtlippen so weit elastisch umlegbar sind, bis ihre radialen Dichtzonen jeweils radial ausgerichtet sind. Dabei wird die eine Dichtlippe axial in die eine Richtung umgebogen, während die andere Dichtlippe axial in die entgegengesetzte Richtung umgebogen wird. Hierdurch lassen sich vergleichsweise hohe Vorspannkräfte realisieren, welche dann die Dichtlippen mit ihren Dichtzonen radial gegen die Dichtfläche vorspannen.

Ferner ist eine Ausführungsform möglich, bei der die beiden Dichtlippen so weit elastisch umlenkbar sind, bis ihre Spitzen axial voneinander weg weisen. Dies ist von besonderem Vorteil, da in diesem Fall die eine Dichtlippe ihre Dichtungswirkung bei positiven Druckpulsen erhöht, während die andere Dichtlippe ihre Dichtwirkung bei negativen Druckpulsen erhöht.

Eine andere Ausführungsform sieht vor, dass das Profil eine Basis aufweist, die in eine Ringnut radial eingesetzt ist, die an einem die Anschlussöffnung an einer vom Innenraum abgewandten Außenseite der Anschlussplatte einfassenden Kragen ausgebildet ist. In diesem Fall handelt es sich bei der Dichtung um ein separates Bauteil, das sich besonders einfach in die genannte Ringnut einsetzen lässt.

Bei einer Weiterbildung kann das Profil in der Basis einen Stützbereich aufweisen, der sich axial an einer die Ringnut an einer dem Innenraum zugewandten Seite begrenzenden Innenwand abstützt. Hierdurch kann die axiale Abstützung der Dichtung in der Ringnut für den Montagevorgang verbessert werden. Beispielsweise lassen sich dadurch Montagefehler, bei denen die Dichtung beim Montieren aus der Ringnut austritt, besser vermeiden.

Vorzugsweise kann dieser Stützbereich keilförmig sein. Vorteilhaft kann dieser Stützbereich ausschließlich in einem zwischen der Innenwand und dem Kontaktbereich liegenden Bereich der Basis ausgebildet sein. Bevorzugt kann der Stützbereich radial innen einen Konus definieren, der sich zum Innenraum hin verjüngt. Hierdurch erhält der Stützbereich eine breite Kontaktfläche zur sicheren Abstützung an besagter Innenwand.

Zusätzlich oder alternativ kann vorgesehen sein, dass die Basis an einem dem Innenraum zugewandten inneren Ende eine radiale Höhe aufweist, die größer, vorzugsweise mindestens doppelt so groß, ist wie eine radiale Höhe, welche die Basis an einem vom Innenraum abgewandten äußeren Ende aufweist. Ebenso ist denkbar, dass der Kontaktbereich axial vom inneren Ende der Basis und vom äußeren Ende des Basis entfernt angeordnet ist. Ferner kann vorgesehen sein, dass die äußere Dichtlippe bei entspannter Dichtung axial über die Basis vorsteht und/oder dass die Basis bei entspannter Dichtung axial über die innere Dichtlippe vorsteht. Die vorstehenden Maßnahmen können jeweils für sich oder gemeinsam oder in beliebiger Kombination realisierbar sein und zur besseren Funktionalität der Dichtung beitragen.

Vorteilhaft ist eine Ausführungsform, bei der die Dichtung an einem an der Anschlussplatte ausgebildeten Kragen angeordnet ist, der die Anschlussöffnung an einer vom Innenraum abgewandten Seite einfasst. An diesem Kragen kann ferner ein Bund ausgebildet sein, der an dem Kragen distal zur Anschlussöffnung angeordnet ist und radial nach innen absteht. Außerdem wird vorgeschlagen, dass die dem Innenraum zugewandte innere Dichtlippe bei entspannter Dichtung radial nach innen über diesen Bund vorsteht, während der Bund seinerseits bei entspannter Dichtung radial nach innen über die vom Innenraum abgewandte äußere Dichtlippe vorsteht. Hierdurch wird erreicht, dass beim Einsetzen des Filterelements in ein Filtergehäuse ein Anschlussstutzen, der mit dem Kragen axial gesteckt wird, gegebenenfalls mit dem Bund kollidiert, nicht jedoch mit der dem Anschlussstutzen zugewandten äußeren Dichtlippe. Somit kann die Gefahr einer Beschädigung der äußeren Dichtlippe reduziert werden. Die innere Dichtlippe ist vom Anschlussstutzen abgewandt, so dass dort die Beschädigungsgefahr ohnehin reduziert ist.

Besonders vorteilhaft ist eine Ausführungsform, bei der die beiden Dichtlippen im Profil unterschiedlich lang sind. Hierdurch können den beiden Dichtlippen unterschiedliche Funktionen zugeordnet werden. Bevorzugt ist dabei eine Ausführungsform, bei der die dem Innenraum zugewandte innere Dichtlippe im Profil länger ist als die vom Innenraum abgewandte äußere Dichtlippe. Diese Bauform hat den Vorteil, dass sich das Filterelement im Bereich der Anschlussöffnung leichter auf einen Anschlussstutzen aufstecken lässt. Die Gefahr einer Beschädigung der kürzeren äußeren Dichtlippe ist dabei reduziert.

Besonders vorteilhaft ist eine Weiterbildung, bei der die längere innere Dichtlippe bei entspannter Dichtung radial nach innen über die kürzere äußere Dichtlippe vorsteht. Insbesondere kann dadurch eine Konfiguration geschaffen werden, bei der die Dichtung im Bereich der äußeren Dichtlippe im entspannten Zustand einen Innendurchmesser aufweist, der größer ist als ein Außendurchmesser der korrespondierenden zylindrischen Dichtfläche, beispielsweise des vorstehend genannten Anschlussstutzens. Gleichzeitig ist dann bei entspannter Dichtung ein Innendurchmesser im Bereich der inneren Dichtlippe kleiner als der Außendurchmesser der Dichtfläche. Dies hat zur Folge, dass beim Montieren des Filterelements beispielsweise der vorstehend genannte Stutzen beim Einführen in die Anschlussöffnung im Wesentlichen nur mit der inneren Dichtlippe kollidiert und diese bei weitergehender Einführbewegung mitnimmt. Die dabei resultierende elastische Verformung der Dichtung führt dann dazu, dass die äußere Dichtlippe axial und in Verbindung damit auch radial nach innen verstellt wird, bis auch die innere Dichtlippe an der Dichtfläche radial zur Anlage kommt. Sofern der weiter oben genannte Bund vorgesehen ist, ist der Innendurchmesser des Kragens an diesem Bund kleiner als der Innendurchmesser der Dichtung im Bereich der äußeren Dichtlippe und größer als der Außendurchmesser der Dichtfläche am Stutzen.

Insbesondere kann ferner vorgesehen sein, dass die äußere Dichtlippe bei entspannter Dichtung eine die Ringnut an einer vom Innenraum abgewandten Seite axial begrenzende Außenwand radial übergreift. Auf diese Weise nutzt die Dichtung im entspannten Zustand Bauraum aus, um den Montagevorgang zu vereinfachen.

Ferner kann gemäß einer anderen Ausführungsform vorgesehen sein, dass die beiden Dichtlippen im Profil unterschiedlich dick sind. Bevorzugt ist dabei die dem Innenraum zugewandte innere Dichtlippe im Profil dicker als die vom Innenraum abgewandte äußere Dichtlippe. Die unterschiedlichen Dicken der Dichtlippen können ebenfalls zur Verbesserung unterschiedlicher Funktionalitäten dienen. Beispielsweise kann die dickere innere Dichtlippe für eine üblicherweise vorherrschende positive Druckdifferenz optimiert sein, während die dünnere Dichtlippe hinsichtlich negativer Druckdifferenzen optimiert sein kann.

Auch für die zweite grundlegende Ausführungsform ist es möglich, den Filterkörper um den Innenraum ringförmig geschlossen auszugestalten, nämlich bei einem Ringfilterelement. Alternativ dazu kann der Filterkörper um den Innenraum nur U-förmig umlaufen, wobei dann eine offene Seite des U-förmigen Filterkörpers durch die Anschlussplatte verschlossen ist.

Eine erfindungsgemäße Filtereinrichtung, die sich für eine Verwendung in einer Frischluftanlage einer Brennkraftmaschine eignet, besitzt ein Filtergehäuse, das einen Frischlufteinlass und einen Frischluftauslass aufweist. Ferner ist diese Filtereinrichtung mit einem Filterelement der vorstehend beschriebenen Art ausgestattet, das im Filtergehäuse eine mit dem Frischlufteinlass fluidisch verbundene Rohseite von einer mit dem Frischluftauslass fluidisch verbundenen Reinseite trennt.

Sofern in der Filtereinrichtung ein Filterelement gemäß der ersten grundlegenden Ausführungsform zur Anwendung kommt, ist im Filtergehäuse eine Anschlussstelle zum Anschließen der Anschlussöffnung vorgesehen, die eine axial offene Anschlussnut aufweist, deren einander im Querschnittsprofil radial zugewandte Wände eine radial innere Dichtfläche und eine radial äußere Dichtfläche bilden, an denen die radialen Dichtzonen der beiden Dichtlippen radial anliegen. Eine derartige Bauform lässt sich vergleichsweise preiswert realisieren und ermöglicht einen axialen Toleranzausgleich zwischen Filterelement und Filtergehäuse.

Bei einer Weiterbildung dieser Ausführungsform können die beiden Dichtlippen außerdem jeweils eine axiale Dichtzone aufweisen, die an einem Nutgrund der Anschlussnut axial anliegen. Hierdurch wird die Dichtungswirkung nochmals verbessert. Die jeweilige axiale Dichtzone befindet sich optional ebenfalls distal zur Spitze an der Innenflanke der jeweiligen Dichtlippe. Zusätzlich oder alternativ befindet sich an der jeweiligen Dichtlippe die radialen Dichtzone zwischen der Spitze und der axialen Dichtzone.

Bei einer anderen Ausgestaltung der Filtereinrichtung kann ein Filterelement gemäß der zweiten grundlegenden Ausführungsform zur Anwendung kommen. In diesem Fall weist das Filtergehäuse einen Anschlussstutzen zum axialen Einstecken in die Anschlussöffnung auf, an dessen radialer Außenseite die Dichtzonen der beiden Dichtlippen anliegen. Die hier für die Montage vorgesehene Steckverbindung zwischen Filterelement und Anschlussstutzen reduziert in Verbindung mit den V-förmig angeordneten Dichtlippen die Gefahr einer Beschädigung der Dichtung beim Einsetzen des Filterelements in das Filtergehäuse. Gleichzeitig kann eine effiziente Dichtungswirkung realisiert werden.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Komponenten beziehen.

Es zeigen, jeweils schematisch,
- Fig. 1: eine isometrische Ansicht eines Filterelements in einem teilweise geschnitten dargestellten Filtergehäuse einer Filtereinrichtung,
- Fig. 2: eine vergrößerte Detailansicht in einem Bereich II aus Fig. 1, in dem sich ein Anschluss zwischen dem Filterelement und dem Filtergehäuse befindet,
- Fig. 3: ein vergrößertes Detail III aus Fig. 2 im Bereich einer geschnitten dargestellten Dichtung,
- Fig. 4: einen Längsschnitt der Filtereinrichtung im Bereich der Dichtung,
- Fig. 5: einen Längsschnitt wie in Fig. 4 bei einer weiteren Ausführungsform in einem entspannten Zustand a der Dichtung sowie in einem eingebauten Zustand b des Filterelements,
- Fig. 6: eine isometrische Ansicht des Filterelements bei einer anderen Ausführungsform,
- Fig. 7: eine isometrische Schnittansicht des Filterelements aus Fig. 6 im Bereich der Dichtung,
- Fig. 8: einen Längsschnitt des Filterelements aus Fig. 6 im Bereich der Dichtung,
- Fig. 9: isometrische Schnittansichten im Bereich der Dichtung bei verschiedenen Zuständen a bis f während der Montage.

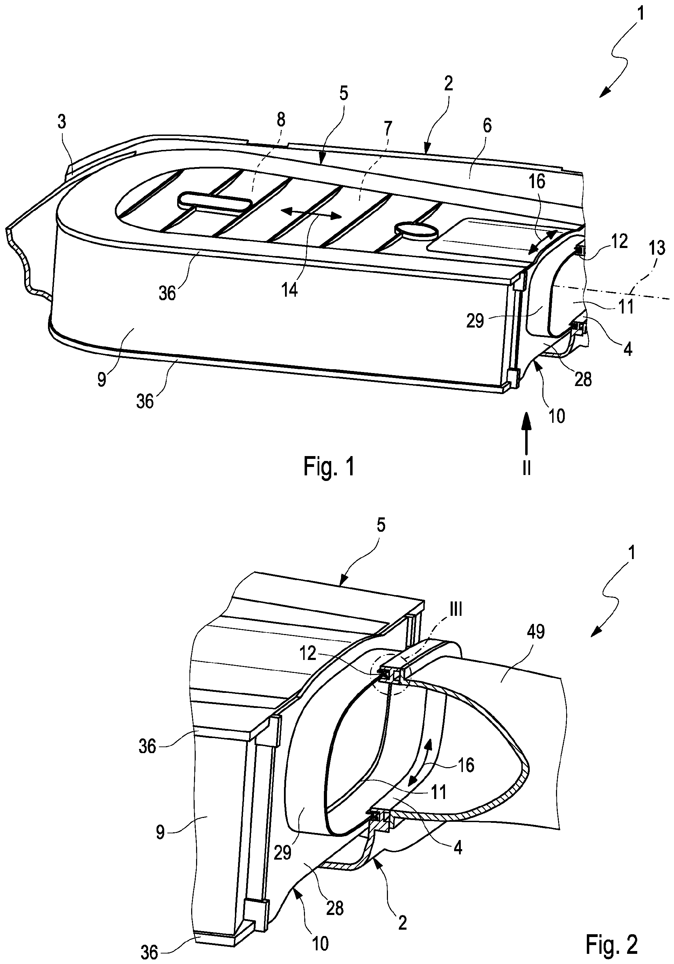

Entsprechend Figur 1 umfasst eine Filtereinrichtung 1, bei der es sich bevorzugt um eine Frischluftfiltereinrichtung einer Frischluftanlage einer Brennkraftmaschine handelt, ein Filtergehäuse 2, das einen Frischlufteinass 3 und einen Frischluftauslass 4 aufweist. Im Filtergehäuse 2 ist ein Filterelement 5 angeordnet, das im Filtergehäuse 2 eine Rohseite 6 von einer Reinseite 7 trennt. Die Rohseite 6 ist mit dem Frischlufteinlass 3 fluidisch verbunden. Die Reinseite 7 ist mit dem Frischluftauslass 4 fluidisch verbunden. Im Beispiel der Figur 1 befindet sich die Rohseite 6 außerhalb des Filterelements 5, während sich die Reinseite 7 innerhalb des Filterelements 5 befindet bzw. durch einen Innenraum 8 des Filterelements 5 gebildet ist. Dementsprechend umhüllt die Rohseite 6 das Filterelement 5 im Inneren des Filtergehäuses 2. In Figur 2 ist diese Frischluftanlage teilweise dargestellt und mit 49 bezeichnet.

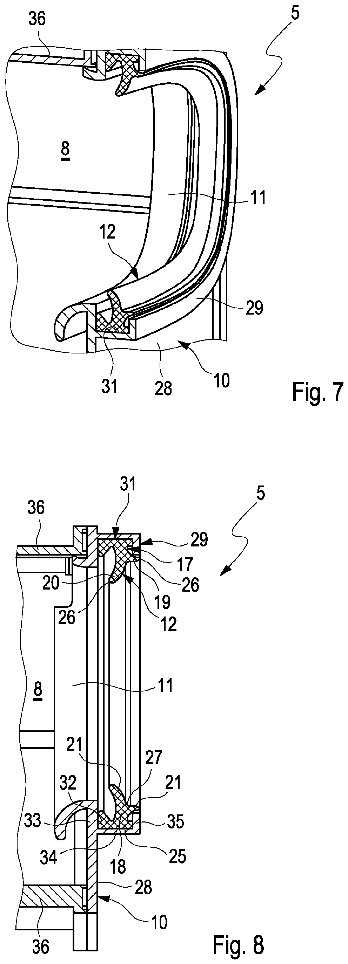

Entsprechend den Figuren 1 bis 9 umfasst das Filterelement 5 einen Filterkörper 9 aus einem Filtermaterial, der den Innenraum 8 des Filterelements 5 zumindest teilweise umschließt. Das Filterelement 5 besitzt außerdem eine Anschlussplatte 10, die eine zum Innenraum 8 offene Anschlussöffnung 11 aufweist. Bei den hier gezeigten Ausführungsformen ist der Filterkörper 9 jeweils U-förmig ausgestaltet, so dass er den Innenraum 8 nicht vollständig, sondern nur teilweise umschließt. Die offene Seite des U-förmigen Filterkörpers 9 wird hier durch die vorstehend genannte Anschlussplatte 10 verschlossen. Bei einer anderen, hier nicht gezeigten Ausführungsform kann der Filterkörper 9 dagegen ringförmig geschlossen um den Innenraum 8 umlaufen. Die Anschlussplatte 10 ist dann durch eine von zwei Endscheiben gebildet, die an den beiden axialen Stirnseiten des ringförmigen Filterkörpers 9 angeordnet sind.

Außerdem weist das Filterelement 5 eine Dichtung 12 auf, die um die Anschlussöffnung 11 geschlossen umläuft und die im Bereich der Anschlussöffnung 11 an der Anschlussplatte 10 angeordnet ist. Des Weiteren besitzt das Filterelement 5 eine Längsachse 13, die sich durch den Innenraum 8 und durch die Anschlussöffnung 11 erstreckt. Diese Längsachse 13 definiert eine Axialrichtung 14, die parallel zur Längsachse 13 verläuft. Hierdurch sind auch eine Radialrichtung 15, die in den Längsschnitten angedeutet ist, und eine Umlaufrichtung 16 bzw. Umfangsrichtung 16 der Anschlussöffnung 11 definiert, die in den isometrischen Ansichten angedeutet ist und bezüglich der Längsachse 13 umläuft.

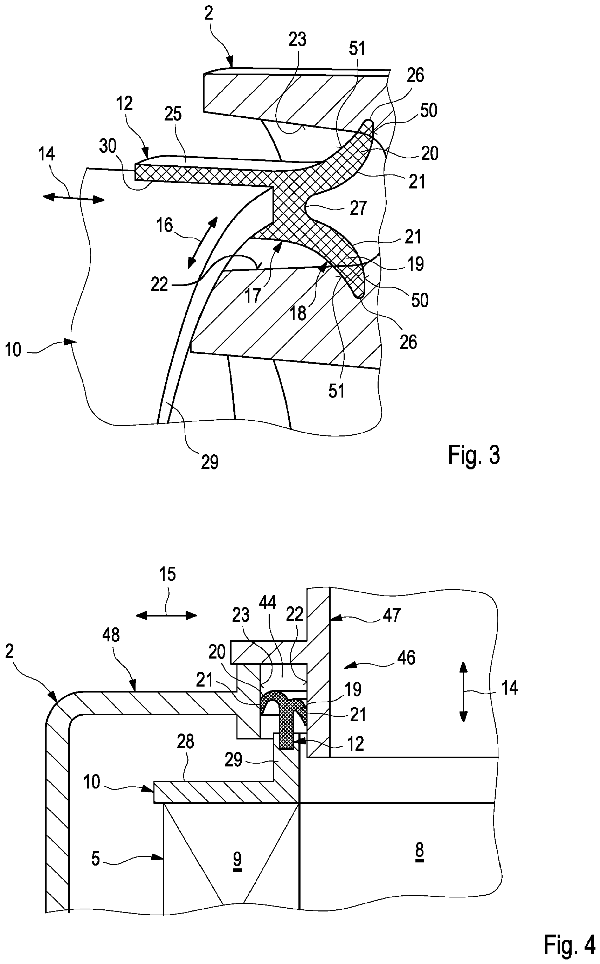

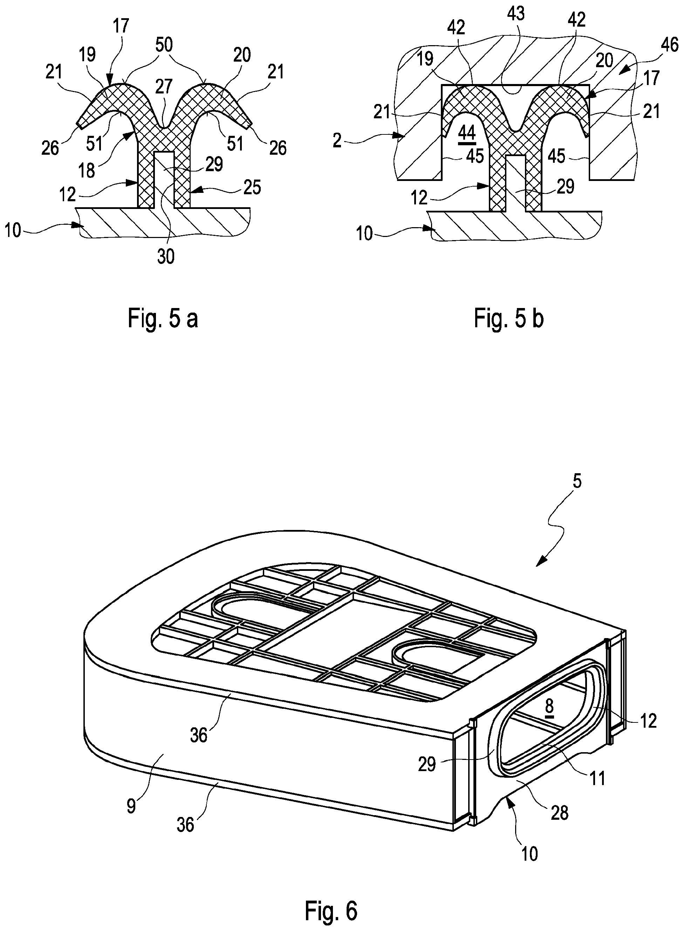

Bei allen hier gezeigten Ausführungsformen weist die Dichtung 12 quer zu ihrer Umlaufrichtung 16 ein Profil 17 auf, das einen V-förmigen Kontaktbereich 18 aufweist, der sich durch zwei V-förmig angeordnete Dichtlippen 19, 20 auszeichnet. Die beiden Dichtlippen 19, 20 weisen jeweils eine radiale Dichtzone 21 auf, die für eine radiale Kontaktierung mit zwei Dichtflächen 22, 23 bei den Ausführungsformen der Figuren 1-5 bzw. mit einer Dichtfläche 24 bei den Ausführungsformen der Figuren 6-9 vorgesehen sind. Die jeweilige Dichtfläche 22, 23, 24 findet sich dann an einer Komponente des Filtergehäuses 2. Die radialen Dichtzonen 21 der beiden Dichtlippen 19, 20 sind an Innenflanken 50 der Dichtlippen 19, 20 beabstandet zu Spitzen 26 der Dichtlippen 19, 20 angeordnet. Diese Innenflanken 50 begrenzen im Profil 17 eine V-förmige Rinne 27. Diese Innenflanken 50 sind in einem entspannten Zustand der Dichtung 12 zumindest am Grund der Rinne 27 einander zugewandt. Dieser entspannte Zustand der Dichtung 12 liegt dann vor, wenn das Filterelement 5 nicht im Filtergehäuse 2 angeordnet ist. Die Dichtung 12 ist in den Figuren 3, 5a, 7, 8 und 9a jeweils im entspannten Zustand dargestellt, unabhängig davon, ob das Filterelement 5 dabei im Filtergehäuse 2 angeordnet ist oder nicht. Ferner sind die Innenflanken 50 bei entspannter Dichtung 12 zur Rinne 27 hin konvex gewölbt. Im Unterschied dazu sind von der Rinne 27 abgewandte Außenflanken 51 der Dichtlippen 19, 20 bei entspannter Dichtung 12 von der Rinne 27 weg konkav gewölbt. An der jeweiligen Dichtlippe 19, 20 treffen in der Spitze 26 die Innenflanke 50 und die Außenflanke 51 zusammen.

Im Beispiel der Figuren 1-5 ist das Profil 12 außerdem mit einer Basis 25 ausgestattet, die an der Anschlussplatte 10 angeordnet ist. Von dieser Basis 25 geht der Kontaktbereich 18 axial, also parallel zur Axialrichtung 14 aus. In der Folge weisen die Spitzen 26 der beiden Dichtlippen 19, 20 radial voneinander weg, wenn die Dichtung 12 ihren entspannten Zustand besitzt. Ferner ist zwischen den im Kontaktbereich 18 V-förmig angeordneten Dichtlippen 19, 20 die besagte Rinne 27 ausgebildet, die an einer von der Anschlussplatte 10 abgewandten Seite axial offen ist. Ferner sind hier die radialen Dichtzonen 21 der beiden Dichtlippen 19, 20 für eine radiale Kontaktierung mit zwei sich radial gegenüberliegenden Dichtflächen 22, 23 vorgesehen. Dies lässt sich besonders deutlich den Figuren 4 und 5b entnehmen. Dort liegen die Dichtlippen 19, 20 mit ihren radialen Dichtzonen 21 an den beiden sich gegenüberliegenden Dichtflächen 22, 23 an. In Figur 3 sind zwar die beiden sich gegenüberliegenden Dichtflächen 22, 23 erkennbar, jedoch ist hier die Dichtung 12 noch im entspannten Zustand dargestellt, so dass die beiden radialen Dichtzonen 21 einander zugewandt sind. Dementsprechend lassen sich die beiden Dichtlippen 19, 20 bei der hier gezeigten Ausführungsform so weit elastisch umlegen, dass im montierten Zustand gemäß den Figuren 4 und 5b die radialen Dichtzonen 21 voneinander abgewandt sind. In Figur 5b ist außerdem eine Ausführungsform gezeigt, bei der sich die beiden Dichtlippen 19, 20 so weit elastisch umlegen lassen, dass ihre Spitzen 26 letztlich jeweils zur Anschlussplatte 10 weisen.

Bei den hier gezeigten Ausführungsformen besitzt die Anschlussplatte 10 an einer vom Innenraum 8 abgewandten Außenseite 28 einen Kragen 29, der die Anschlussöffnung 11 einfasst und dementsprechend entlang der Einlassöffnung 11 in der Umfangsrichtung 16 geschlossen umläuft. Zweckmäßig ist die Dichtung 12 an diesen Kragen 29 angebaut. In diesem Fall handelt es sich bei der Dichtung 12 um ein separates Bauteil. Alternativ dazu kann die Dichtung 12 auch an den Kragen 29 angespritzt oder angeschäumt sein. Im Beispiel der Figuren 1-5 handelt es sich bei der Dichtung 12 um ein Ansteckteil, das auf den Kragen 29 axial aufgesteckt ist. Hierzu ist die Basis 25 mit einer entsprechenden Aufstecköffnung 30 ausgestattet. Im Unterschied dazu zeigen die Figuren 6-9 eine Ausführungsform, bei der die Dichtung 12 als Einlegeteil ausgestaltet ist. Die Dichtung 12 ist dabei in eine Ringnut 31 eingelegt, die am Kragen 29 ausgebildet ist.

Gemäß Figur 5b kann die Dichtung 12 an den beiden Dichtlippen 19, 20 zu den radialen Dichtzonen 21 außerdem axiale Dichtzonen 42 aufweisen, die im Beispiel der Figur 5b an einem Nutgrund 43 einer Anschlussnut 44 axial anliegen. Diese Anschlussnut 44 kann sich beispielsweise an dem in Fig. 2 gezeigten Rohrstück der Frischluftanlage 49 befinden. Hierdurch verbessert sich die Dichtungswirkung. Unabhängig davon, ob die Dichtlippen 19, 20 den Nutgrund 43 axial kontaktieren oder nicht, liegen die beiden Dichtlippen 19, 20 mit ihren radialen Dichtzonen 21 radial an einander gegenüberliegenden Wänden 45 der Anschlussnut 44 an. Die Anschlussnut 44 ist am Filtergehäuse 2 ausgebildet und zur Anschlussplatte 10 hin axial offen.

Im Beispiel der Figur 4 ist das Filtergehäuse 2 im Bereich einer Anschlussstelle 46, die zum Anschließen der Anschlussöffnung 11 ausgestaltet ist, zweiteilig konfiguriert. Dementsprechend ist hier ein Stutzenbauteil 47 an ein Schalenbauteil 48 angebaut. Auch hier können Herstellungstoleranzen und Montagetoleranzen auftreten, die beispielsweise eine radiale Breite der Anschlussnut 44 entlang deren Umlaufrichtung variieren lässt. Die vorgestellte Dichtung 12 kann derartige variierende Nutbreiten kompensieren.

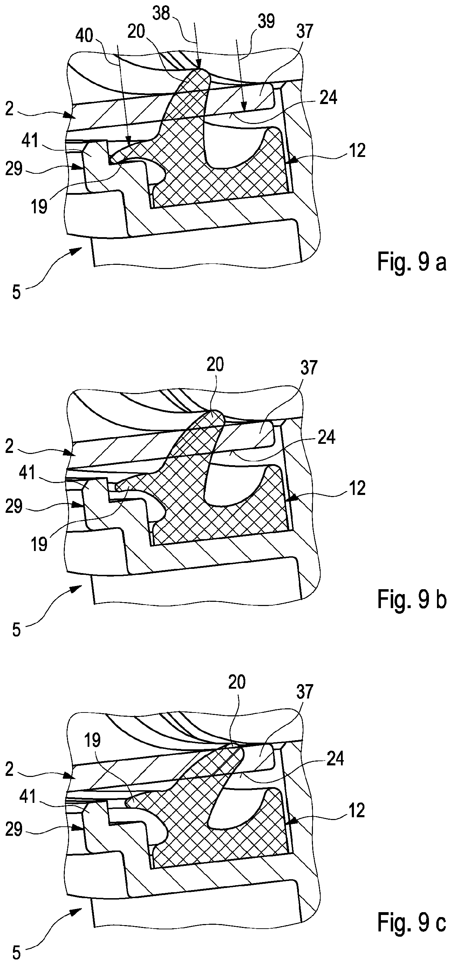

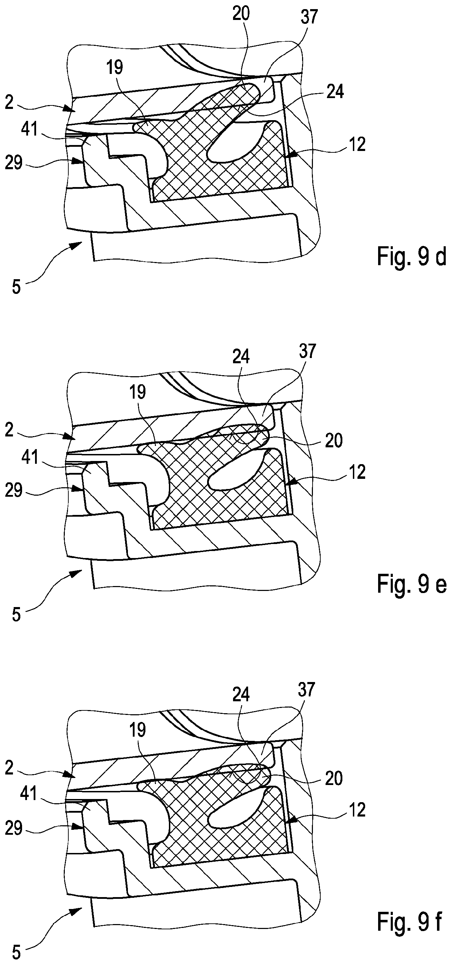

Im Beispiel der Figuren 6-9 besitzt die Dichtung 12 in ihrem Profil 17 wieder eine Basis 25, von welcher der V-förmige Kontaktbereich 18 ausgeht, im Unterschied zum Beispiel der Figuren 1-5 jedoch nicht axial, sondern radial, und zwar nach innen gerichtet, also in Richtung zur Anschlussöffnung 11. Die Spitzen 26 der Dichtlippen 19, 20 weisen dann bei entspannter Dichtung 12 im Wesentlichen axial voneinander weg. Die zwischen den V-förmig angeordneten Dichtlippen 19, 20 ausgebildete Rinne 27 ist in diesem Beispiel radial nach innen offen. Ferner sind die radialen Dichtzonen 21 der beiden Dichtlippen 19, 20 hier jeweils für eine radiale Kontaktierung mit einer gemeinsamen Dichtfläche 24 vorgesehen, die in Figur 9 gezeigt ist. Gemäß Figur 9f lassen sich die beiden Dichtlippen 19, 20 so weit elastisch umlegen, dass ihre radialen Dichtzonen 21 jeweils radial ausgerichtet sind und dass die Spitzen 26 der beiden Dichtlippen 19, 20 axial voneinander weg weisen.

Bei den Beispielen der Fig. 6 bis 9 ist an der Basis 25 des Profils 17 außerdem ein vorzugsweise keilförmiger Stützbereich 32 ausgeformt, der sich axial an einer Innenwand 33 abstützt, welche die Ringnut 31 an einer dem Innenraum 8 zugewandten Seite begrenzt. Die Basis 25 stützt sich insgesamt, also auch mit dem Stützbereich 32 radial an einem Nutgrund 34 ab, der die Ringnut 31 radial nach außen begrenzt. Axial gegenüber von diesem Stützbereich 32 stützt sich die Basis 25 axial an einer Außenwand 25 ab, welche die Ringnut 31 an einer vom Innenraum 8 abgewandten Seite axial begrenzt.

Der Stützbereich 32 ist bei den hier gezeigten Beispielen außerdem nur in einem zwischen der Innenwand 33 und dem Kontaktbereich 18 liegenden Bereich der Basis 25 ausgebildet. Ebenso definiert der Stützbereich 32 radial innen einen Konus, der sich zum Innenraum 8 hin verjüngt. Die Basis 25 weist hier an einem dem Innenraum 8 zugewandten inneren Ende eine radiale Höhe auf, die größer ist, vorzugsweise mindestens doppelt so groß ist, wie eine radiale Höhe, welche die Basis 25 an einem vom Innenraum 8 abgewandten äußeren Ende aufweist. Insbesondere besitzt die radiale Höhe der Basis 25 am Übergang zwischen Stützbereich 32 und Kontaktbereich 18 ein lokales Minimum. Außerdem ist hier der Kontaktbereich 18 axial vom inneren Ende der Basis 25 und vom äußeren Ende des Basis 25 entfernt angeordnet.

Besonders vorteilhaft ist hier gezeigt, dass die äußere Dichtlippe 19 bei entspannter Dichtung 12 axial über die Basis 25 vorsteht und dass die Basis 25 bei entspannter Dichtung 12 axial über die innere Dichtlippe 20 vorsteht.

Im Profil 17 sind die beiden Dichtlippen 19, 20 bei der in den Fig. 6 bis 9 gezeigten Ausführungsform unterschiedlich lang. Außerdem sind die beiden Dichtlippen 19, 20 im Profil 17 unterschiedlich dick. Erkennbar ist dabei die dem Innenraum 8 zugewandte innere Dichtlippe 20 länger und dicker als die vom Innenraum 8 abgewandte äußere Dichtlippe 19.

Im entspannten Zustand der Dichtung 12 ragt die längere innere Dichtlippe 20 radial weiter nach innen als die kürzere äußere Dichtlippe 19, so dass die innere Dichtlippe 20 radial nach innen über die äußere Dichtlippe 19 vorsteht. Hierdurch kann die nachfolgend anhand der Figuren 9a bis 9d erläuterte Funktionalität für die Dichtung 12 realisiert werden. Ferner ist die Dichtung 12 so geformt, dass im entspannten Zustand die äußere Dichtlippe 19 die Außenwand 35 radial innen axial überlappt, also radial übergreift.

Sofern das Filterelement 5 wie bei den hier gezeigten Ausführungsformen einen U-förmigen Filterkörper 9 aufweist, besitzt der Innenraum 8 eine offene Seite zwischen den Längsenden des Filterkörpers 9. Diese offene Seite ist mit Hilfe der Anschlussplatte 10 dicht verschlossen. Außerdem ist der Innenraum 8 durch zwei Endplatten 36 verschlossen, die gleichzeitig auch die Längsseiten des Filterkörpers 9 verschließen. Zweckmäßig ist die Anschlussplatte 10 auch mit diesen Endplatten 36 fest verbunden.

Bezugnehmend auf die Figuren 9a-9f wird nunmehr die Montage des Filterelements 5 gemäß der in den Figuren 6-9 gezeigten Ausführungsform näher erläutert. Beim Montieren muss das Filterelement 5 in das Gehäuse 2 eingesetzt werden. Hierbei wird das Filterelement 5 im Bereich der Anschlussöffnung 11 auf einen am Filtergehäuse 2 ausgebildeten Anschlussstutzen 37 axial aufgesteckt. Für das Filterelement 5 bedeutet dies, dass beim Montieren besagter Anschlussstutzen 37 axial in die Anschlussöffnung 11 eingesteckt wird. Beim Einstecken des Anschlussstutzens 37, respektive beim Aufstecken des Filterelements 5 auf diesen Anschlussstutzen 37 dringt der Anschlussstutzen 37 in die Anschlussöffnung 11 ein. Dabei dringt der Anschlussstutzen 37 auch in den von der Dichtung 12 umschlossenen Bereich ein. Dabei tritt der Anschlussstutzen 37 zunächst mit der inneren Dichtlippe 20 in Kontakt. Dies ist darauf zurückzuführen, dass die Dichtung 12 im entspannten Zustand an der innenliegenden Dichtlippe 20 einen Innendurchmesser 38 aufweist, der kleiner ist als ein Außendurchmesser 39, den die zylindrische Außenseite des Anschlussstutzens 37 besitzt, auf der sich die Dichtfläche 24 befindet. Dabei kollidiert der Anschlussstutzen 37 regelmäßig nicht mit der äußeren Dichtlippe 19, da die Dichtung 12 im entspannten Zustand im Bereich dieser äußeren Dichtlippe 19 einen Innendurchmesser oder Innenquerschnitt 40 aufweist, der größer ist als der Außenquerschnitt 39 des Anschlussstutzens 37 im Bereich der Dichtfläche 24. Außerdem ist im Beispiel der Figur 9 am Kragen 29 ein Bund 41 ausgebildet, der radial nach innen über die äußere Dichtlippe 19 vorsteht, solange die Dichtung 12 im entspannten Zustand ist. Somit kann der Anschlussstutzen 37 bei unachtsamer Montage bestenfalls mit dem Bund 41 des Kragens 29 kollidieren.

Bei fortschreitendem Einsteckvorgang wird die innere Dichtlippe 20 zunehmend axial nach innen in Richtung Innenraum 8 umgelegt. Aufgrund der integralen Ausgestaltung der Dichtung 12 ergibt sich dadurch auch eine Verstellbewegung für die äußere Dichtlippe 19. Diese wird dabei im Profil 17 radial nach innen gekippt, wodurch sie sich in Richtung Anschlussstutzen 37 verstellt. Wie dem Ablauf der Figuren 9a-9d zu entnehmen ist, nähert sich die äußere Dichtlippe 19 mit fortschreitender Einsteckbewegung des Anschlussstutzens 37 zunehmend dem Anschlussstutzen 37 an, bis sie daran in den Figuren 9d-9f radial anliegt. Zunächst entsteht dabei ein linienförmiger Kontakt wie in Fig. 9d, der dann mit zunehmender Einsteckbewegung des Anschlussstutzens 37 zu einem flächigen Kontakt wird wie in den Fig. 9e und 9f, was auf eine zunehmende radiale Vorspannung zurückzuführen ist, mit der die äußere Dichtlippe 19 radial an der Dichtfläche 24 anliegt. In Figur 9f ist hier sogar eine durchgehende Kontaktierung über beide Dichtlippen 19, 20 an der Dichtfläche 24 erkennbar. Somit besitzt die hier vorgestellte Dichtung 12 eine besonders effiziente Dichtungswirkung. Bemerkenswert ist außerdem, dass die außenliegende Dichtlippe 19 bei einem Unterdruck im Innenraum 8 zusätzlich durch den in der Umgebung herrschenden Überdruck gegen die Dichtfläche 24 angedrückt wird, was die Dichtungswirkung der Dichtung 12 verbessert.

## Patentansprüche

1. Filterelement für eine Filtereinrichtung (1), insbesondere eine Frischluftanlage einer Brennkraftmaschine,
- mit einem Filterkörper (9) aus einem Filtermaterial, der einen Innenraum (8) des Filterelements (5) zumindest teilweise umschließt,
- mit einer Anschlussplatte (10), die eine zum Innenraum (8) offene Anschlussöffnung (11) aufweist,
- mit einer um die Anschlussöffnung (11) geschlossen umlaufenden Dichtung (12), die im Bereich der Anschlussöffnung (11) an der Anschlussplatte (10) angeordnet ist,
- mit einer sich durch den Innenraum (8) und durch die Anschlussöffnung (11) erstreckenden Längsachse (13),
**dadurch gekennzeichnet,**
- **dass** die Dichtung (12) quer zu ihrer Umlaufrichtung (16) ein Profil (17) aufweist, das einen V-förmigen Kontaktbereich (18) mit zwei Dichtlippen (19, 20) aufweist,
- **dass** die beiden Dichtlippen (19, 20) jeweils eine für eine radiale Kontaktierung mit einer Dichtfläche (22, 23; 24) vorgesehene, radiale Dichtzonen (21) aufweisen, die von Spitzen (26) der Dichtlippen (19, 20) beabstandet sind.

2. Filterelement nach Anspruch 1,
**dadurch gekennzeichnet,**
**dass** das Profil (17) eine an der Anschlussplatte (10) angeordnete Basis (25) aufweist, von welcher der Kontaktbereich (18) radial ausgeht, so dass die Spitzen (26) der Dichtlippen (19, 20) bei entspannter Dichtung (12) axial voneinander weg weisen.

3. Filterelement nach Anspruch 1 oder 2,
**dadurch gekennzeichnet,**
- **dass** zwischen den im Kontaktbereich (18) V-förmig angeordneten Dichtlippen (19, 20) eine Rinne (27) ausgebildet ist, die radial offen ist, und/oder
- **dass** die radialen Dichtzonen (21) der beiden Dichtlippen (19, 20) für eine radiale Kontaktierung mit einer gemeinsamen Dichtfläche (24) vorgesehen sind.

4. Filterelement nach einem der Ansprüche 1 bis 3,
**dadurch gekennzeichnet,**
- **dass** die beiden Dichtlippen (19, 20) so weit elastisch umlegbar sind, bis ihre radialen Dichtzonen (21) jeweils radial ausgerichtet sind, und/oder
- **dass** die beiden Dichtlippen (19, 20) so weit elastisch umlegbar sind, bis ihre Spitzen (26) axial voneinander weg weisen.

5. Filterelement nach einem der Ansprüche 1 bis 4,
**dadurch gekennzeichnet,**
**dass** das Profil (17) eine Basis (25) aufweist, die in eine Ringnut (31) radial eingesetzt ist, die an einem die Anschlussöffnung (11) an einer vom Innenraum (8) abgewandten Außenseite (28) der Anschlussplatte (10) einfassenden Kragen (29) ausgebildet ist.

6. Filterelement nach Anspruch 1 oder 5,
**dadurch gekennzeichnet,**
**dass** das Profil (17) in der Basis (25) einen Stützbereich (32) aufweist, der sich axial an einer die Ringnut (31) an einer dem Innenraum (8) zugewandten Seite begrenzenden Innenwand (33) abstützt.

7. Filterelement nach Anspruch 6,
**dadurch gekennzeichnet,**
- **dass** der Stützbereich (32) keilförmig ist, und/oder
- **dass** der Stützbereich (32) nur in einem zwischen der Innenwand (33) und dem Kontaktbereich (18) liegenden Bereich der Basis (25) ausgebildet ist, und/oder
- **dass** der Stützbereich (32) radial innen einen Konus definiert, der sich zum Innenraum (8) hin verjüngt.

8. Filterelement nach einem der Ansprüche 1 und 5 bis 7,
**dadurch gekennzeichnet,**
- **dass** die Basis (25) an einem dem Innenraum (8) zugewandten inneren Ende eine radiale Höhe aufweist, die größer, vorzugsweise mindestens doppelt so groß, ist wie eine radiale Höhe, welche die Basis an einem vom Innenraum (8) abgewandten äußeren Ende aufweist, und/oder
- **dass** der Kontaktbereich (18) axial vom inneren Ende der Basis und vom äußeren Ende des Basis entfernt angeordnet ist, und/oder
- **dass** die äußere Dichtlippe (19) bei entspannter Dichtung (12) axial über die Basis (25) vorsteht, und/oder
- **dass** die Basis (25) bei entspannter Dichtung (12) axial über die innere Dichtlippe (20) vorsteht.

9. Filterelement nach einem der Ansprüche 1 bis 8,
**dadurch gekennzeichnet,**
- **dass** die Dichtung (12) an einem an der Anschlussplatte (10) ausgebildeten Kragen (29) angeordnet ist, der die Anschlussöffnung (11) an einer vom Innenraum (8) abgewandten Seite einfasst,
- **dass** die dem Innenraum (8) zugewandte innere Dichtlippe (20) bei entspannter Dichtung (12) radial nach innen über einen Bund (41) vorsteht, der an dem Kragen (29) distal zur Anschlussöffnung (11) angeordnet ist und radial nach innen absteht,
- **dass** der Bund (41) bei entspannter Dichtung (12) radial nach innen über die vom Innenraum (8) abgewandte äußere Dichtlippe (19) vorsteht.

10. Filterelement nach einem der Ansprüche 1 bis 9,
**dadurch gekennzeichnet,**
- **dass** die beiden Dichtlippen (19, 20) im Profil (17) unterschiedlich lang sind, und/oder
- **dass** die dem Innenraum (8) zugewandte innere Dichtlippe (20) im Profil (17) länger ist als die vom Innenraum (8) abgewandte äußere Dichtlippe (19),wobei die längere innere Dichtlippe (20) bei entspannter Dichtung (12) radial nach innen über die kürzere äußere Dichtlippe (19) vorsteht.

11. Filtereinrichtung nach Anspruch 10,
**dadurch gekennzeichnet,**
**dass** die äußere Dichtlippe (19) bei entspannter Dichtung (12) eine die Ringnut (31) an einer vom Innenraum (8) abgewandten Seite axial begrenzende Außenwand (35) radial übergreift.

12. Filterelement nach einem der Ansprüche 1 bis 11,
**dadurch gekennzeichnet,**
- **dass** die beiden Dichtlippen (19, 20) im Profil (17) unterschiedlich dick sind, und/oder
- **dass** die dem Innenraum (8) zugewandte innere Dichtlippe (20) im Profil (17) dicker ist als die vom Innenraum (8) abgewandte äußere Dichtlippe (19).

13. Filterelement nach Anspruch 1,
**dadurch gekennzeichnet,**
**dass** das Profil (17) eine an der Anschlussplatte (10) angeordnete Basis (25) aufweist, von welcher der Kontaktbereich (18) axial ausgeht, so dass die Spitzen (26) der Dichtlippen (19, 20) bei entspannter Dichtung (12) radial voneinander weg weisen.

14. Filterelement nach Anspruch 13,
**dadurch gekennzeichnet,**
- **dass** zwischen den im Kontaktbereich (18) V-förmig angeordneten Dichtlippen (19, 20) eine Rinne (27) ausgebildet ist, die axial offen ist,
- **dass** die radialen Dichtzonen (21) der beiden Dichtlippen (19, 20) für eine radiale Kontaktierung mit zwei sich radial gegenüberliegenden Dichtflächen (22, 23) vorgesehen sind,
- **dass** die beiden Dichtlippen (19, 20) so weit elastisch umlegbar sind, bis ihre radialen Dichtzonen (21) voneinander abgewandt sind, und insbesondere so weit elastisch umlegbar sind, bis ihre Spitzen (26) jeweils zur Anschlussplatte (10) weisen, und
- **dass** das Profil (17) eine Basis (25) aufweist, die auf einen die Anschlussöffnung (11) an einer vom Innenraum (8) abgewandten Außenseite (28) der Anschlussplatte (10) einfassenden Kragen (29) aufgesteckt ist.

15. Filtereinrichtung für eine Frischluftanlage einer Brennkraftmaschine,
- mit einem Filtergehäuse (2), das einen Frischlufteinlass (3) und einen Frischluftauslass (4) aufweist,
- mit einem Filterelement (5) nach einem der Ansprüche 1 bis 14, das im Filtergehäuse (2) eine mit dem Frischlufteinlass (3) fluidisch verbundene Rohseite (6) von einer mit dem Frischluftauslass (4) fluidisch verbundenen Reinseite (7) trennt.
